(19) Europäisches Patentamt
European Patent Office
Office européen des brevets

(11) Publication number: 0 468 380 A1

(12) EUROPEAN PATENT APPLICATION

(21) Application number: 91112127.5

(51) Int. Cl.5: C09B 29/045, B41M 5/34

(22) Date of filing: 19.07.91

(30) Priority: 21.07.90 JP 193283/90

(43) Date of publication of application:
29.01.92 Bulletin 92/05

(84) Designated Contracting States:
DE FR GB

(71) Applicant: SONY CORPORATION
7-35, Kitashinagawa 6-chome Shinagawa-ku
Tokyo(JP)

(72) Inventor: Inoue, Toshihisa
c/o Sony Corporation, 7-35 Kitashinagawa
6-chome
Shinagawa-ku,Tokyo(JP)
Inventor: Abe, Tetsuya
c/o Sony Corporation, 7-35 Kitashinagawa
6-chome
Shinagawa-ku,Tokyo(JP)
Inventor: Fujiwara, Yoshio
c/o Sony Corporation, 7-35 Kitashinagawa
6-chome
Shinagawa-ku,Tokyo(JP)

(74) Representative: TER MEER - MÜLLER -
STEINMEISTER & PARTNER
Mauerkircherstrasse 45
W-8000 München 80(DE)

(54) **Magenta dye and thermal transfer material comprising it.**

(57) A magenta dye of the formula:

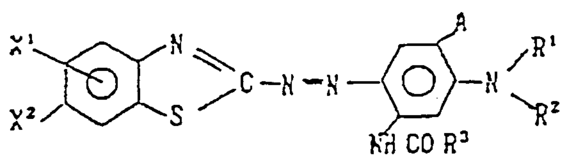

wherein:

A is selected from a group consisting of a methyl group, a methoxy group, an alkylcarbonylamino group, and a hydrogen atom:

$X^1$ and $X^2$ are selected from a group consisting of a hydrogen atom, a halogen atom and a nitro group;

$R^1$ and $R^2$ are selected from a group consisting of an alkyl group, an alkoxyalkyl group, and an alkoxycarbonyl group, and each is substituted by a group selected from an alkyl group, a hydroxyl group, a halogen atom, and a cyano group; and

$R^3$ is an alkyl group.

A thermal transfer material is disclosed comprising a support and an ink layer, wherein the ink layer comprises the magenta dye of the formula described hereinabove.

EP 0 468 380 A1

The present invention relates to a magenta dye and its use in thermal transfer printing.

The present invention further relates to a thermal transfer material which uses the magenta dye in an ink layer of the thermal transfer material.

A thermal transfer system involves the application of thermal energy to a thermal transfer sheet having an ink layer. For example, a thermal head is used in applying the thermal energy. In the process, the dye contained in the ink layer is subsequently transferred to a recording sheet. Currently, this type of thermal transfer system is utilized as the printing procedure for a facsimile. Since this system is suitable for obtaining an image record from electrical signals, it has been developed as a means for printing color images by converting electric signals such as those from an electronic still reproduction camera.

A recording material that has been adapted for use in the thermal transfer system is a sublimation-type transfer sheet. The sublimation-type transfer sheet includes a support on which an ink layer is formed, wherein the ink layer comprises a sublimable dye and a binder resin. The sublimation-type transfer sheet is a thermal transfer recording material, wherein heat, as from a thermal head, is applied to the sheet, causing the dye in the heated portion to sublimate, transfer to, and then record on an acceptor sheet. With a sublimation-type transfer sheet, only the dye is transferred to the acceptor sheet. Accordingly, the amount of energy supplied to the thermal head permits relatively easy control of gradation. As such, attention has focused on the use of the sublimation-type transfer sheet as a recording material suitable for color image printing or recording.

Color image recording that utilizes a sublimation-type transfer sheet is usually conducted with four types of thermal transfer sheets, having ink layers of magenta, yellow, cyan, and black sublimable dyes, respectively. The respective inks are then thermally transferred to an acceptor sheet successively.

In order to obtain a color image of good quality when using a sublimation-type transfer sheet, the characteristics of the respective dyes in the ink layers are very important. For example, as proposed in Japanese Laid-open Patent Application No. 62-55194, a number of dyes, including azo compounds having a heteroaromatic ring and an aromatic ring, have been developed as a magenta dye.

U.S. Patent 4,764,178 discloses a thermal transfer printing sheet comprising a substrate having a coating comprising at least one azo dye.

The dyes used in a sublimation-type transfer sheet should meet certain requirements, including ready sublimation by application of heat from a thermal head without undergoing any thermal decomposition, a large absorptivity coefficient of the molecule, a favorable color or hue with respect to color reproduction, good light resistance, transferability, chemical resistance and weatherability, and easy preparation as to safety and hygiene. Dyes which satisfy these requirements are non-existent in the prior art. Therefore, good quality color recording images have not yet been obtained.

The present invention provides a novel magenta dye of the general formula:

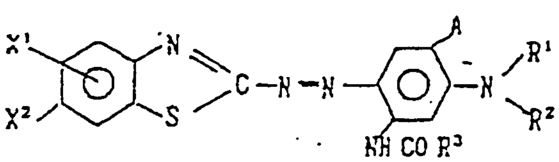

wherein:

| | |
|---|---|
| A | is selected from the group consisting of a methyl group, a methoxy group, an alkylcarbonylamino group, and a hydrogen atom; |
| $X^1$ and $X^2$ | are selected from the group consisting of a hydrogen atom, a halogen atom, and a nitro group; |
| $R^1$ and $R^2$ | are selected from the group consisting of an alkyl group, alkoxyalkyl group, and an alkoxycarbonylalkyl group, and each is substituted by a group selected from an alkyl group, a hydroxyl group, a halogen atom, and a cyano group; and |
| $R^3$ | is an alkyl group. |

Suitable for use in thermal transfer printing, the magenta dye overcomes the disadvantages of existing magenta dyes by being readily sublimated by the heat applied during thermal transfer printing. As a result, the magenta dye of the present invetion provides good color in high density with good light resistance. In addition, the magenta dye remains stable in an acceptor sheet when transferred.

The present invention futher provides a thermal transfer material comprising a substrate and an ink layer on the substrate, wherein said ink layer comprises the magenta dye discussed hereinabove.

In one embodiment of the magenta dye of the present invention, $X^1$ is a halogen atom located at the 6

position of the benzothiazolyl group, and $X^2$ is a halogen atom located at the 4 position of the benzothiazolyl group.

In one embodiment of the thermal transfer material, $X^1$ is selected from the group consisting of a halogen atom and a nitro group, and is located at the 6 position of the benzothiazolyl group; $X^2$ is a hydrogen atom.

Additional features and advantages of the present invention are described in, and will be apparent from the detailed description of the presently preferred embodiments.

The present invention provides a formulation for a magenta dye that is suitable for use in thermal transfer printing. The present invention further provides a thermal transfer material, comprising a substrate and an ink layer formed on the substrate, wherein said ink layer comprises the magenta dye.

The magenta dye of the present invention is an azo compound that serves as the central connecting portion for a benzothiazolyl group and an aminophenyl group, wherein one or two intended substituents (i.e., a halogen atom or a nitro group) are incorporated at positions 4, 5, and/or 6 of the benzothiazolyl group.

The combination of the azo compound and the aforementioned substituents produces good sublimation properties, color reproduction, color density, light resistance, and transferability without exception. Even better properties are obtained when an azo compound is substituted with a halogen or a nitro group at the 6 position of the benzothiazolyl group in the formulation (i.e., $X^1$ = halogen atom or nitro group and $X^2$ = hydrogen atom), or, in the alternative, when an azo compound is substituted with a halogen atom at the 6 position and at the 4 or 5 position of the benzothiazolyl group (i.e., $X^1$ = halogen atom and $X^2$ = hydrogen atom).

Since the magenta dye of the present invention is an azo compound which has a benzothiazolyl group and an aminophenyl group, and wherein the intended substituent(s) are incorporated, the dye is readily sublimated by the application of heat necessary for thermal transfer printing. The use of the magenta dye formulation described herein provides good magenta color in high density with a good light resistance. In addition, the dye remains stable in an acceptor sheet.

The magenta dye is readily prepared by a reaction between an azo compound such as 2-amino-5,6-dichlorobenzothiazole and a coupling component such as 3-propionylamino-N,N-diethylaniline, and under conditions that are sufficient for diazo coupling. These conditions are particularly described in the following examples.

On the other hand, the thermal transfer material may be in various forms such as a sheet, a ribbon, or the like. The material comprises a substrate or support that is usually in the form of a sheet, a film, or the like. The support may be made of synthetic and natural resins, paper, or something comparable. The material includes an ink layer which is located on the support, and which is made of a magenta dye that is dispersed in a binder resin. The binder resin may be any resin which is ordinarily used for this purpose, including thermoplastic resins such as ethyl hydroxyethyl cellulose.

The ink layer is formed on the support by applying an ink composition on the support using established methods. The ink layer is usually applied in a dry thickness of 1-2 $\mu$m. The ink layer of the thermal transfer material is further characterized as comprising a magenta dye of the specific type as defined hereinabove. It is further contemplated that additives, coating conditions, and other requirements ordinarily used in the art in making thermal transfer materials may be used in practicing this invention.

By way of example and not limitation, the following examples of specific compositions of the magenta dye and thermal transfer material serve to further illustrate principles of the present invention and its preferred embodiments.

EXAMPLE 1 - PREPARATION OF THE AZO DYE AND A THERMAL TRANSFER SHEET COMPRISING THE DYE IN AN INK LAYER.

In this example, an azo dye is prepared as well as a sublimation-type thermal transfer sheet comprising an ink layer containing the dye.

The azo dye is prepared by subjecting an azo component, 2-amino-5,6-dichlorobenzothiazole, to diazo coupling, wherein 3-propionylamino-N,N-diethylaniline is used as the coupling component. The reaction is represented as follows:

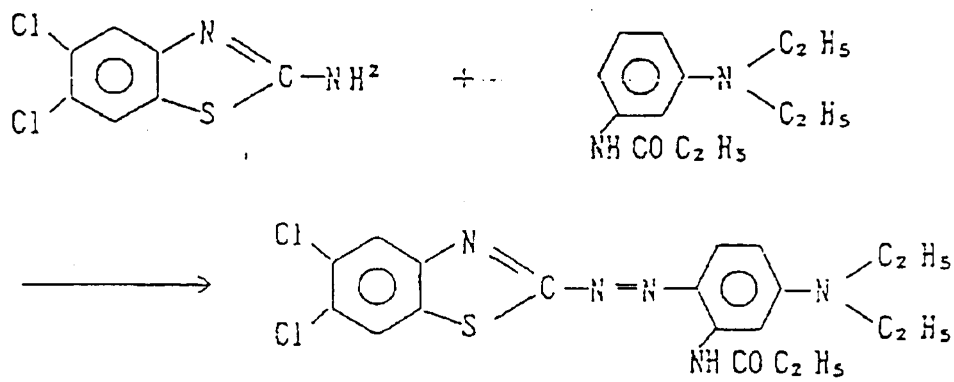

In particular, 10 parts of 2-aminodichlorobenzothiazole is placed in 100 parts of 80% phosphoric acid, followed by dissolution by heating to 80° C. After cooling down to 5° C or below, four parts of sodium nitrite are added portion by portion within approximately ten minutes for diazonization to occur, resulting in a diazo solution. Thereafter, 15 parts of 3-propionylamino-N,N-diethylaniline is added to 50 parts of acetone, to which 100 parts of water is added for dissolution. This mixture is then cooled down to 5° C or below. Next, the diazo solution described hereinabove is added to the cooled mixture portion by portion. After completion of this step, the resulting mixture is agitated for one hour, filtered, and washed with water in order to obtain an azo compound.

The azo compound is then purified by column chromatography, using chloroform as the developing solvent (packing material, Wakogel C-200, is commercially available from Wako Junyaku K.K.). Further, the azo compound was subsequently used as Dye 1 in the following study.

A sublimation-type thermal transfer sheet containing Dye 1 in an ink layer was made by applying an ink layer composition containing Dye 1 onto a polyethylene terephthalate (PET) film in a dry thickness of about 1 µm. The ink layer composition was prepared according to the following formulation:

| | |
|---|---|
| Dye 1 | 3.70 parts by weight |
| Ethyl hydroxyethyl cellulose (EHEC-Low, available from Hercules Inc.) | 7.42 parts by weight |
| Toluene | 44.44 parts by weight |
| Methyl ethyl ketone | 44.44 parts by weight |

An acceptor sheet, the material to be transferred, was made by applying an acceptor layer composition in a dry thickness of 10µm onto a 150 µm thick synthetic paper (FPG-150 available from Ohji Yuka Co., Ltd.), and then cured at 50° C for 48 hours. The acceptor layer composition was prepared as follows:

| | |
|---|---|
| Polyester resin (Ereetel VE3600, commercially available from Unichika Co., Ltd.) | 100.0 parts by weight |
| Isocyanate (Takenate D-11ON, commercially available from Takeda Pharm. Co., Ltd.) | 5.0 parts by weight |
| Modified silicone oil (SF8427, commercially available from Toray-Dow Corning Silicone Co., Ltd.) | 1.0 part by weight |
| Methyl ethyl ketone | 60.0 parts by weight |
| Toluene | 240.0 parts by weight |

The thermal transfer printing was performed by a color video printer (G5000, available from Sony Corporation, Ltd.) for stairing-up printing of twelve gradations.

EXAMPLE 2 - EXAMPLES 2-13

Prepared by the method of Example 1, Dyes 2-13 were used in Examples 2-13 in place of Dye 1, thereby making thermal transfer sheets for use in thermal transfer printing. Dyes 2-13 were prepared under similar conditions as set forth in Example 1 using a diazo component and coupling components having structures corresponding to the respective dyes. Table 1 below lists the substituents A, $R^1$, $R^2$, $R^3$, $X^1$, and

$X^2$ when the respective dyes are represented by the following Formula (1):

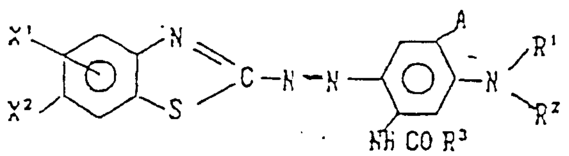

..........(1)

TABLE 1

| | A | $R^1$ | $R^2$ | $R^3$ | $X^1$ | $X^2$ |
|---|---|---|---|---|---|---|
| Dye 1 | H | $C_2H_5$ | $C_2H_5$ | $C_2H_5$ | Cl | 5-Cl |
| Dye 2 | H | $C_2H_5$ | $C_2H_5$ | $C_2H_5$ | Cl | 4-Cl |
| Dye 3 | H | $C_2H_5$ | $C_2H_5$ | $C_2H_5$ | Cl | H |
| Dye 4 | H | $N\text{-}C_5H_{11}$ | $N\text{-}C_5H_{11}$ | $CH_3$ | Cl | 5-Cl |
| Dye 5 | H | $C_2H_5$ | $C_2H_5$ | $C_2H_5$ | Br | 5-Br |
| Dye 6 | H | $C_2H_5$ | $C_2H_5$ | $C_2H_5$ | Cl | H |
| Dye 7 | H | $C_2H_5$ | $C_2H_5$ | $C_2H_5$ | $NO_2$ | H |
| Dye 8 | $OCH_3$ | $C_2H_5$ | $C_2H_5$ | $C_2H_5$ | Cl | 5-Cl |
| Dye 9 | H | $C_2H_5$ | $C_2H_5$ | $CH_3$ | Cl | H |
| Dye 10 | H | $n\text{-}C_3H_{11}$ | $C_2H_4CN$ | $CH_3C$ | Cl | 5-Cl |
| Dye 11 | H | $C_2H_4OH$ | $C_2H_4OH$ | $H_3$ | Cl | 5-Cl |
| Dye 12 | H | $C_2H_4OCOCH_3$ | $C_2H_4OCOCH_3$ | $C_2H_5$ | Cl | 5-Cl |
| Dye 13 | $OCH_3$ | $C_2H_5$ | $C_2H_5$ | $C_2H_5$ | Cl | 4-Cl |

With respect to $X^2$ in Table 1, each figure represents the position of the substituent in the benzothiazolyl ring.

For Examples 1-13, the color of the dye, the color density of a printed image, and the stability in a material to be transferred were determined. These results are set forth in Table 2 below.

TABLE 2

| | λmax(nm) | max Density | Transferability |
|---|---|---|---|
| Example 1 | 540 | 3.06 | good |
| Example 2 | 538 | 2.83 | good |
| Example 3 | 534 | 3.08 | good |
| Example 4 | 545 | 3.01 | good |
| Example 5 | 540 | 3.05 | good |
| Example 6 | 532 | 3.07 | good |
| Example 7 | 545 | 3.00 | good |
| Example 8 | 592 | 2.18 | good |
| Example 9 | 587 | 2.31 | good |
| Example 10 | 525 | 2.89 | good |
| Example 11 | 540 | 2.67 | good |
| Example 12 | 540 | 2.71 | good |
| Example 13 | 592 | 2.20 | good |

In Table 2, the maximum absorption (λmax) indicates the wave length at which a transferred dye exhibits an absorption maximum in chloroform. The print maximum density (max Density is the maximum color density of an image when measured by a Macbeth densitometer (TR-924, commercially available from Status A Filter Co., Ltd.). The transferability is evaluated by a procedure, wherein a synthetic paper (FPG-60) is superposed on an image surface exhibiting a maximum color density, and then applied with a pressure of 40 g/cm$^2$, and then aged at 60°C for 48 hours. The color density of the dye transferred to the

synthetic paper is measured by the Macbeth densitometer. As indicated in Table 2, the color density of the dye transferred to the synthetic paper was evaluated as "good" with a value of not larger than 0.10.

As further shown in Table 2, the images obtained by thermal transfer printing in Examples 1-13 exhibited absorption maxima at 530-580 nm, and assumed a good magenta color. The maximum color density was high enough to print color images. Moreover, the transferability was good for all of the examples, and the dyes remained stable in the reception layer.

In assessing the light resistance of the images printed in Examples 1-13, the images were irradiated for approximately 30 hours using a carbon fade meter (Suga Testing Machine Co., Ltd.). The results indicated that the images obtained by the thermal transfer printing in Examples 1-13 had undergone any discoloration by the irradiation and, thus, exhibited good light resistance.

As is apparent from the foregoing, the magenta dye of the present invention can be readily sublimated by application of heat used in thermal transfer printing. A good magenta color with a high density is obtained, and the dye has a good light resistance. Further, the dye remains stable in an acceptor sheet. When thermal transfer printing is affected using a sublimation-type thermal transfer sheet containing the magenta dye, the resulting magenta image exhibits good gradation properties and a high color density. Further, the dye has a good light resistance and remains stable in a material to be transferred. Accordingly, it is possible to affect image printing without involving any discoloration and removal of the color, while at the same time retaining good stability.

It should be understood that various changes and modifications to the presently preferred embodiments described herein will be apparent to those skilled in the art. Such changes and modifications can be made without departing from the spirit and scope of the present invention and without diminishing its attendant advantages. It is, therefore, intended that such changes and modifications be covered by the appended claims.

## Claims

**1.** A magenta dye of the formula:

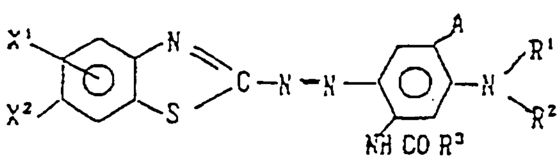

wherein:

| | |
|---|---|
| A | is selected from the group consisting of a methyl group, a methoxy group, an alkylcarbonylamino group, and a hydrogen atom; |
| $X^1$ and $X^2$ | are selected from the group consisting of a hydrogen atom, a halogen atom, and a nitro group; |
| $R^1$ and $R^2$ | are selected from the group consisting of an alkyl group, an alkoxyalkyl group, and an alkoxycarbonylalkyl group, and each is substituted by a group selected from an alkyl group, a hydroxyl group, a halogen atom, and a cyano group; and |
| $R^3$ | is an alkyl group. |

**2.** The magenta dye of Claim 1, wherein:

$X^1$ is selected from the group consisting of a halogen atom and a nitro group, and is located at the 6 position of the benzothiazolyl group; and

$X^2$ is a hydrogen atom.

**3.** The magenta dye of Claim 1, wherein:

$X^1$ is a halogen atom located at the 6 position of the benzothiazolyl group; and

$X^2$ is a halogen atom located at the 4 position of the benzothiazolyl group.

**4.** The magenta dye of Claim 1, wherein:

$X^1$ is a halogen atom located at the 6 position of the benzothiazolyl group; and

$X^2$ is a halogen atom located at the 5 position of the benzothiazolyl group.

**5.** A thermal transfer material comprising:

a substrate and an ink layer formed on the substrate, said ink layer comprising a magenta dye of the formula:

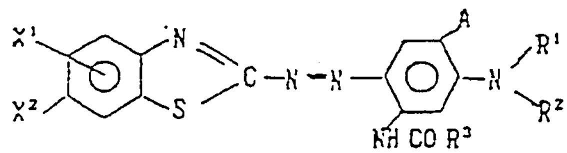

wherein:

| | |
|---|---|
| A | is selected from the group consisting of a methyl group, a methoxy group, an alkylcarbonylamino group, and a hydrogen atom; |
| $X^1$ and $X^2$ | are selected from the group consisting of a hydrogen atom, a halogen atom, and a nitro group; |
| $R^1$ and $R^2$ | are selected from the group consisting of an alkyl group, an alkoxyalkyl group, and an alkoxycarbonylalkyl group, and each is substituted by a group selected from an alkyl group, a hydroxyl group, a halogen atom, and a cyano group; and |
| $R^3$ | is an alkyl group. |

**6.** The thermal transfer material of Claim 5, wherein:

| | |
|---|---|
| $X^1$ | is selected from the group consisting of a halogen atom and a nitro group, and is located at the 6 position of the benzothiazolyl group; and |
| $X^2$ | is a hydrogen atom. |

**7.** The thermal transfer material of Claim 5, wherein:

| | |
|---|---|
| $X^1$ | is a halogen atom located at the 6 position of the benzothiazolyl group; and |
| $X^2$ | is a halogen atom located at the 4 position of the benzothiazolyl group. |

**8.** The thermal transfer material of Claim 5, wherein:

| | |
|---|---|
| $X^1$ | is a halogen atom located at the 6 position of the benzothiazolyl group; and |
| $X^2$ | is a halogen atom located at the 5 position of the benzothiazolyl group. |

European Patent Office

# EUROPEAN SEARCH REPORT

Application Number

EP 91112127.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US - A - 4 488 992 (YOSHINAGA et al.) * Totality * -- | 1-4 | C 09 B 29/045<br>B 41 M 5/34 |
| X | PATENT ABSTRACTS OF JAPAN, unexamined applications, C field, vol. 11, No. 30, January 29, 1987 THE PATENT OFFICE JAPANESE GOVERNMENT page 28 C 400 * Kokai-No. 61-200 170 (MITSUBISHI CHEM IND LTD) * -- | 1-4 | |
| X | EP - A1 - 0 365 392 (SUMITOMO CHEMICAL COMPANY, LIMITED) * Claims 1,6 * -- | 1-8 | |
| D,A | US - A - 4 764 178 (GREGORY et al.) * Claim 1; column 6, lines 39-67 * ---- | 5-8 | TECHNICAL FIELDS SEARCHED (Int. Cl.5)<br>C 09 B<br>B 41 M |

The present search report has been drawn up for all claims

| Place of search | Date of completion of the search | Examiner |
|---|---|---|
| VIENNA | 15-10-1991 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document